# EUROPEAN PATENT SPECIFICATION

(11) **EP 3 050 905 B1**
(45) Date of publication and mention of the grant of the patent: **22.11.2017**
(21) Application number: 16152864.1
(22) Date of filing: 27.01.2016
(51) Int. Cl.: C08F 6/06, C08L 29/04

(54) **POLYVINYL ALCOHOL AND PURIFICATION METHOD THEREOF**
POLYVINYLALKOHOL UND REINIGUNGSVERFAHREN DAFÜR
ALCOOL POLYVINYLIQUE ET SON PROCÉDÉ DE PURIFICATION

(30) Priority: 27.01.2015 TW 104102654
(43) Date of publication of application: 03.08.2016
(73) Proprietor: Chang Chun Petrochemical Co., Ltd., Taipei City 104 (TW)
(72) Inventor: LU, Chih-Sheng, 104 Taipei City (TW); LU, Wen-Shien, 104 Taipei City (TW); HSU, Chia-Hao, 1 Taipei City (TW)
(74) Representative: Gill Jennings & Every LLP

(56) References cited:
- EP-A1- 1 516 889
- EP-A1- 2 543 692
- CN-A- 101 357 956

## Description

### BACKGROUND OF THE INVENTION

### 1. Field of the Invention

The present invention relates to highly purified polyvinyl alcohols (PVA) and purification methods thereof, and more specifically, to polyvinyl alcohol with a low concentration of methanol and a purification method thereof.

### 2. Description of the Related Art

Polyvinyl alcohol (hereinafter referred to as PVA) is a water-soluble polymeric compound synthesized by German scientists, Hermann and Haenel, in 1942. The compound has both hydrophilic and lipophilic groups, and is thus widely applied as protective colloids of latex, inorganic dispersants, pharmaceutical excipient, etc.

Current industrial methods of producing polyvinyl alcohol involves subjecting ethylene to oxidation in acetic acid to obtain vinyl acetate, and then polymerizing vinyl acetate by solution polymerization to obtain polyvinyl acetate. Then, the residual vinyl acetate in polyvinyl acetate are removed by azeotropy of methanol and methyl acetate. The step is referred to as "demonomerization." The refined vinyl acetate obtained after demonomerization hydrolyzes in the presence of an alkaline catalyst. In general, alkaline hydrolysis is carried out by mixing a solution of polyvinyl acetate in methanol with a solution of sodium hydroxide in methanol including, and stirring evenly. During this process, the polyvinyl acetate solution gradually becomes colloidal, and completely solidifies in the end. During the reaction, the catalytic amount, reaction temperature, time and the like for alkaline hydrolysis can be used to adjust the degree of alkaline hydrolysis. The obtained solid polyvinyl acetate is pulverized and dried to obtain a finished polyvinyl alcohol product.

During the process of producing polyvinyl alcohol by alkaline hydrolysis of a solution of polyvinyl acetate in methanol, the reaction products are polyvinyl alcohol, methyl acetate, acetate, and a reaction solvent. If the sodium hydroxide is used as a catalyst, the acetate product is the sodium acetate.

During the drying process, most of the methanol and methyl acetate are removed. However, about 3wt% of methanol and 1.0 wt% of methyl acetate remain. In the whole production process, sodium acetate is embedded inside polyvinyl alcohol. It is hard to remove sodium acetate, even after the drying process. Additionally, the residual methyl acetate lowers the purity of polyvinyl acetate, such that the properties and range of applications of the polyvinyl alcohol are affected.

Among the residues, methanol has higher toxicity. LD₅₀ of methanol is 5628 mg/kg, and can cause an anesthetic effect to a nervous system. By the action of dehydrogenase, methanol is metabolized into formaldehyde and formic acid. Formaldehyde and formic acid would inhibit certain oxidase systems, and obstructs aerobic metabolism. As a result, lactic acid and other organic acids are accumulated in the body, causing acidosis. When higher concentrations of methanol and the metabolic product thereof, formaldehyde and formic acid, are found in aqueous humor and ocular tissue would obstruct retina metabolism. In turn, retina cells and optic nerve are likely to be damaged, causing damages to optical nerves and optical nerve demyelination. In comparison with methanol, ethanol is less toxic and LD₅₀ thereof is 7060 mg/kg.

Further, residual sodium acetate has different effects on various applications of polyvinyl alcohol. With respect to the application in dielectric ceramic adhesive, an excess of sodium acetate would increase the conductivity of the ceramics. In general, the amount of sodium acetate for this application should be less than 0.8 wt%. As regards the application in special silicon wafer cleaning, when the concentration of the sodium acetate in polyvinyl acetate is too high, more water is needed to wash the residual sodium ions off from the wafer. This would increase the cost of post-fabrication process, causing customers problems.

In order to reduce the amount of impurities in polyvinyl alcohol, China Patent No. 101357956 discloses a method for purifying PVA by using ethanol, wherein PVA is added into 60 to 75 mass% of a mixed solution of water and ethanol, and is stirred to swell; after a higher concentration (80 to 90 mass%) of ethanol is added again to precipitate PVA, the precipitated PVA is separated and dried. However, by using the method, which involves adding PVA into different concentrations of ethanol to swell and then to precipitate, only PVA with minimum residues of 0.1 mass% of methanol, 0.09 mass% of methyl acetate, and 2.21 mass% of sodium acetate, can be obtained. This purification method can be used to effectively replace methanol and methyl acetate in the PVA, but poorly for sodium acetate. In addition, when this purification method is used for replacing methanol, it would cause PVA aggregate during the drying process, causing inconvenience in subsequent delivery.

Thus, there remains a need for a purification method to purify the impurities in PVA, in order to obtain PVA with low contents of ash and methanol, and low toxicity as well.

### SUMMARY OF THE INVENTION

The present invention provides a method for purifying PVA, wherein a finished PVA product prepared by a conventional process is added into a low-toxic ethanol solution, and then the mixture is heated and stirred. The use of low-toxic ethanol is to replace high-toxic residues of methanol, methyl acetate and sodium acetate in the finished PVA product. According to this purification method, PVA of pharmaceutical grade can be obtained.

The method for purifying PVA includes the steps as follows:
(a) adding PVA, which is prepared by hydrolyzing polyvinyl acetate with catalysis by a base, into an ethanol solution with an ethanol concentration of 95 wt% or higher;
(b) heating and stirring, at a temperature in the range of from 50 to 100°C, the ethanol solution of comprising the PVA; and
(c) retrieving the PVA from the ethanol solution comprising the PVA, and drying the retrieved PVA.

The present invention further provides PVA, which has less than 0.1 wt% of methanol, less than 0.1 wt% of methyl acetate, and less than 0.3wt% of sodium acetate, based on the total weight of PVA.

The method for purifying PVA of the present invention is a simple, safe method to obtain highly purified PVA. It only involves adding PVA prepared by a conventional process into an ethanol solution with an ethanol concentration of 95 wt% or higher, and heating, stirred and drying the mixture to obtain highly purified PVA, wherein the residues in PVA include less than 0.1 wt% of methanol, less than 0.1 wt% of methyl acetate, and less than 0.3wt% of sodium acetate.

### DETAILED DESCRIPTION OF THE PREFERRED EMBODIMENTS

The following is a detailed description of the present invention by specific embodiments. One skilled in the art shall be able to easily conceive the advantages and effects of the present invention, from the disclosure of the present specification.

In the method of the present invention, the PVA prepared by hydrolyzing polyvinyl acetate with catalysis by a base refers to one prepared by a conventional process. For example, one formed by polymerizing monomers containing vinyl acetate with the action of a free radical initiator in an alcoholic solvent. Examples of the vinyl ester monomer compounds include vinyl acetate, vinyl formate, vinyl propionate, vinyl butyrate, vinyl pivalate, vinyl laurate, vinyl stearate, and vinyl benzoate. Examples of the alcoholic solvents include methanol, ethanol, propanol, and derivatives thereof. Examples of the free radical initiators include azobisisobutyronitrile (AIBN) and benzoyl peroxide (BPO). The method further includes hydrolyzing the polymerized polyvinyl acetate or the copolymer thereof with catalysis by a base to obtain PVA. In general, during alkaline hydrolysis, methanol is used for alcoholysis to prepare PVA. As a result, the finished PVA product includes about 3 wt% of methanol, 1 wt% of methyl acetate, and 1 to 1.5 wt% of sodium acetate.

Therefore, the present invention provides a method for purifying PVA, which includes the steps as follows:
(a) adding PVA, which is prepared by hydrolyzing polyvinyl acetate with catalysis by a base, into an ethanol solution with an ethanol concentration of 95 wt% or higher;
(b) heating and stirring, at a temperature in the range of from 50 to 100°C, the ethanol solution of comprising the PVA; and
(c) retrieving the PVA from the ethanol solution comprising the PVA, and drying the retrieved PVA.

The PVA prepared by hydrolyzing polyvinyl acetate with catalysis by a base can be a cluster of PVA particles in the form of lamellae or granules. In addition, PVA prepared by hydrolyzing polyvinyl acetate with catalysis by a base is a finished PVA product after being dried or a semi-finished PVA product without being dried.

The diameter of the cluster of the PVA particles prepared by hydrolyzing polyvinyl acetate with catalysis by a base is from 5 to 80 meshes.

In one embodiment, the PVA prepared by hydrolyzing polyvinyl acetate with catalysis by a base has a degree of alkaline hydrolysis of from 70 to 99 mole% and a degree of polymerization of from 200 to 4000.

In one embodiment, the PVA prepared by hydrolyzing polyvinyl acetate with catalysis by a base has a degree of alkaline hydrolysis of from 70 to 99 mole% and a degree of from 500 to 2400.

In one embodiment, the PVA prepared by hydrolyzing polyvinyl acetate with catalysis by a base has a degree of alkaline hydrolysis of from 80 to 99 mole% and a degree of polymerization of from 200 to 4000.

In one embodiment, the PVA prepared by hydrolyzing polyvinyl acetate with catalysis by a base has a degree of alkaline hydrolysis of from 80 to 99 mole% and a degree of polymerization of from 500 to 2400.

In one embodiment, in step (a), the PVA needs to be completely soaked in the ethanol solution.

Preferably, in step (a), the finished PVA product is not soluble in the ethanol solution. In terms of implementation, the ethanol concentration of the ethanol solution is from 95 wt% to 100 wt%. When the ethanol concentration reaches 100 wt%, the ethanol solution is simply an ethanol liquid. The present invention breaks the idea of swelling PVA by water for replacing methanol with the ethanol. It is found that by directly using an ethanol solution with an ethanol concentration of 95 wt% or higher to replace methanol, residual methanol and methyl acetate are efficiently, and the content sodium acetate is less than 0.3 wt%.

In one embodiment, in step (b), the mixture of the ethanol solution is heated at a temperature of from 50 to 100 °C, or a temperature higher than the boiling point of methanol, e.g., about 65 to 85 °C, so as to effuse and evaporate methanol in PVA, and thereby accelerating the replacing rate of the methanol in the PVA by the ethanol.

In one embodiment, the heating and stirring time is from 2 to 4 hours, and the stirring speed is from 80 to 120 rpm.

Moreover, each of the steps and conditions set forth in the present invention are based on the ethanol solution with an ethanol concentration of 95 wt% or higher. Other conditions, such as PVA prepared by hydrolyzing polyvinyl acetate with catalysis by a base, the heating temperature, the heating time and the stirring speed, can be mutually combined.

According to the aforesaid method, the present invention further provides PVA, which includes less than 0.1 wt% of methanol, less than 0.1 wt% of methyl acetate, and less than 0.3 wt% of sodium acetate, based on the total weight of the PVA.

In one embodiment, the PVA includes from 0.01 to 0.1 wt% of methanol, from 0.01 to 0.1 wt% of methyl acetate, and from 0.11 to 0.3 wt% of sodium acetate, based on the total weight of PVA.

In one embodiment, the PVA prepared by hydrolyzing polyvinyl acetate with catalysis by a base has a degree of alkaline hydrolysis of from 70 to 99 mole% and a degree of polymerization of from 200 to 4000.

In one embodiment, the PVA prepared by hydrolyzing polyvinyl acetate with catalysis by a base has a degree of alkaline hydrolysis of from 70 to 99 mole% and a degree of polymerization of from 500 to 2400.

In one embodiment, the PVA prepared by hydrolyzing polyvinyl acetate with catalysis by a base has a degree of alkaline hydrolysis of from 80 to 99 mole% and a degree of polymerization of from 200 to 4000.

In one embodiment, the PVA prepared by hydrolyzing polyvinyl acetate with catalysis by a base has a degree of alkaline hydrolysis of 80 to 99 mole% and a degree of polymerization of from 500 to 2400.

In yet one embodiment, the PVA prepared by hydrolyzing polyvinyl acetate with catalysis by a base is a cluster of PVA particles in the form of a lamellae or granules.

In another embodiment, the diameters of the PVA granules range from 5 to 80 meshes.

The following examples are provided only to illustrate the present invention, and do not limit the scope of the claims of the present invention.

### Example 1

400 g of a finished PVA product (with a degree of alkaline hydrolysis of 88 mole%, a degree of polymerization of 500, diameters of from 10 to 20 meshes, and in the form of lamellae) prepared by a conventional process was added into a round-bottomed reactor equipped with a reflux device and containing 1200 g of ethanol (95 wt%) therein. The liquid temperature was controlled at 70 °C. After continuously stirring for 2.5 hours, the liquid was removed by centrifuge, and the pellet was dried at 110 °C for 2 hours to obtain purified PVA. The residues in the purified PVA were detected as shown in Table 1 below.

An analytic method performed on methanol/ethanol/methyl acetate/ethyl acetate in PVA was to weigh precisely 0.5 g of PVA, which was placed in a container dedicated for Headspace (HP7694), on a balance to the fourth decimal place. Then, 9.5 g of water in the container was precisely weighed on the balance, and the container was sealed and heated to dissolve PVA. The PVA solution was analyzed in Headspace (HP7694), and the volatile organic compounds (VOC) in PVA were standardized by using an established standard curve .

**Table 1**

| PVA specification | Degree of alkaline hydrolysis:88 mole% / Degree of polymerization:500 | |
|---|---|---|
| ethanol solution | 5 wt% of water/95 wt% of ethanol | |
| | PVA before purification | PVA after purification |
| wt% of methanol | 2.54 | 0.03 |
| wt% of methyl acetate | 0.33 | 0.02 |
| wt% of ethanol | 0 | 0.75 |
| wt% of ethyl acetate | 0 | 0.03 |
| wt% of sodium acetate | 1.25 | 0.21 |

### Example 2

400 g of a finished PVA product (with a degree of alkaline hydrolysis of 88 mole%, a degree of polymerization of 1700, diameters of from 10 to 60 meshes, and in the form of granules) prepared by the conventional process was added into the round-bottomed reactor equipped with a reflux device and containing 1200 g of ethanol (95 wt%) therein. The liquid temperature was controlled at 70 °C. After continuously stirring for 2 hours, the liquid was removed by centrifuge, and the pellet was dried at 110 °C for 2 hours to obtain purified PVA. The residues in the purified PVA were detected as shown in Table 2 below.

**Table 2**

| PVA specification | Degree of alkaline hydrolysis: 88 mole% / Degree of polymerization: 1700 | |
|---|---|---|
| ethanol solution | 5 wt% of water / 95 wt% of ethanol | |
| | PVA before purification | PVA after purification |
| wt% of methanol | 1.55 | 0.04 |
| wt% of methyl acetate | 0.19 | 0.01 |
| wt% of ethanol | 0 | 0.84 |
| wt% of ethyl acetate | 0 | 0.03 |
| wt% of sodium acetate | 1.05 | 0.18 |

### Example 3

400 g of a finished PVA product (with a degree of alkaline hydrolysis of 99 mole%, a degree of polymerization of 1700, diameters of from 10 to 60 meshes, and in the form of granules) prepared by the conventional process was added into the round-bottomed reactor equipped with a reflux device and containing 1200 g of ethanol (95 wt%) therein. The liquid temperature was controlled at 70 °C. After continuously stirring for 2 hours, the liquid was removed by centrifuge, and the pellet was dried at 110 °C for 2 hours to obtain purified PVA. The residues in the purified PVA were detected as shown in Table 3 below.

**Table 3**

| PVA specification | Degree of alkaline hydrolysis: 88 mole% / Degree of polymerization: 1700 | |
|---|---|---|
| ethanol solution | 5 wt% of water / 95 wt% of ethanol | |
| | PVA before purification | PVA after purification |
| wt% of methanol | 2.35 | 0.08 |
| wt% of methyl acetate | 0.19 | 0.04 |
| wt% of ethanol | 0 | 0.88 |
| wt% of ethyl acetate | 0 | 0.02 |
| wt% of sodium acetate | 1.27 | 0.25 |

### Example 4

400 g of a finished PVA product (with a degree of alkaline hydrolysis of 80 mole%, a degree of polymerization of 2000, diameters of from 10 to 80 meshes, and in the form of granules) prepared by the conventional process was added into the round-bottomed reactor equipped with a reflux device and containing 1200 g of ethanol (95 wt%) therein. The liquid temperature was controlled at 70 °C. After continuously stirring for 2 hours, the liquid was removed by centrifuge, and the pellet was dried at 110 °C for 2 hours to obtain purified PVA. The residues in the purified PVA were detected as shown in Table 4 below.

**Table 4**

| PVA specification | Degree of alkaline hydrolysis: 80 mole% / Degree of polymerization:2000 | |
|---|---|---|
| ethanol solution | 5 wt% of water / 95 wt% of ethanol | |
| | PVA before purification | PVA after purification |
| wt% of methanol | 0.55 | 0.01 |
| wt% of methyl acetate | 0.05 | 0.02 |
| wt% of ethanol | 0 | 0.25 |
| wt% of ethyl acetate | 0 | 0.03 |
| wt% of sodium acetate | 0.35 | 0.11 |

### Example 5

400 g of a finished PVA product (with a degree of alkaline hydrolysis of 80 mole%, a degree of polymerization of 2000, diameters of from 5 to 20 meshes, and in the form of lamella) prepared by the conventional process was added into the round-bottomed reactor equipped with a reflux device and containing 1200 g of anhydrous ethanol therein. The liquid temperature was controlled at 70 °C. After continuously stirring for 3 hours, the liquid was removed by centrifuge, and the pellet was dried at 110 °C for 2 hours to obtain purified PVA. The residues in the purified PVA were detected as shown in Table 5 below.

**Table 5**

| PVA specification | Degree of alkaline hydrolysis: 80 mole% / Degree of polymerization:2000 | |
|---|---|---|
| ethanol solution | anhydrous ethanol | |
| | PVA before purification | PVA after purification |
| wt% of methanol | 1.55 | 0.04 |
| wt% of methyl acetate | 0.19 | 0.02 |
| wt% of ethanol | 0 | 0.89 |
| wt% of ethyl acetate | 0 | 0.03 |
| wt% of sodium acetate | 1.05 | 0.22 |

### Example 6

400 g of a semi-finished PVA product (with a degree of alkaline hydrolysis of 95 mole%, a degree of polymerization of 1700, diameters of from 5 to 20 meshes, in the form of lamellae, and a solid content of 70%), which was not dried after hydrolyzing with catalysis of a base and removing liquid, was added into the round-bottomed reactor equipped with a reflux device and containing 1200 g of anhydrous ethanol therein. The liquid temperature was controlled at 70 °C. After continuously stirring for 3 hours, the liquid was removed by centrifuge, and the pellet was dried at 110 °C for 2 hours to obtain purified PVA. The residues in the purified PVA were detected as shown in Table 6 below.

**Table 6**

| PVA specification | Degree of alkaline hydrolysis: 95 mole% / Degree of polymerization: 1700 | |
|---|---|---|
| ethanol solution | anhydrous ethanol | |
| | PVA before purification | PVA after purification |
| wt% of methanol | 25.15 | 0.06 |
| wt% of methyl acetate | 3.12 | 0.01 |
| wt% of ethanol | 0 | 0.95 |
| wt% of ethyl acetate | 0 | 0.04 |
| wt% of sodium acetate | 1.14 | 0.25 |

### Example 7

400 g of a semi-finished PVA product (with a degree of alkaline hydrolysis of 86 mole%, a degree of polymerization of 2400, diameters of from 5 to 20 meshes, in the form of lamellae, and a solid content of 70%), which was not dried after hydrolyzing with catalysis of a base and removing liquid, was added into the round-bottomed reactor equipped with a reflux device and containing 1200 g of anhydrous ethanol therein. The liquid temperature was controlled at 70 °C. After continuously stirring for 3 hours, the liquid was removed by centrifuge, and the pellet was dried at 110 °C for 2 hours to obtain purified PVA. The residues in the purified PVA were detected as shown in Table 7 below.

**Table 7**

| PVA specification | Degree of alkaline hydrolysis: 86 mole% / Degree of polymerization:2400 | |
|---|---|---|
| ethanol solution | anhydrous ethanol | |
| | PVA before purification | PVA after purification |
| wt% of methanol | 23.15 | 0.07 |
| wt% of methyl acetate | 2.85 | 0.03 |
| wt% of ethanol | 0 | 0.89 |
| wt% of ethyl acetate | 0 | 0.03 |
| wt% of sodium acetate | 0.98 | 0.24 |

The method for purifying PVA of the present invention can be used not only to obtain PVA with low contents of ash and methanol, and low toxicity as well, but also allow PVA not to aggregate during drying. As a result, PVA produced by the method of the present invention does not cause inconvenience to the subsequent delivery, and thereby having industrial values.

The above examples are only used to illustrate the principle and efficacy of the present invention, and not to limit the present invention.

## Claims

1. A method for purifying polyvinyl alcohol, comprising the steps of:
(a) adding polyvinyl alcohol prepared by hydrolyzing polyvinyl acetate with catalysis by a base into an ethanol solution with an ethanol concentration of 95 wt% or higher;
(b) heating and stirring, at a temperature in the range of from 50 to 100°C, the ethanol solution comprising the polyvinyl alcohol; and
(c) retrieving the polyvinyl alcohol from the ethanol solution comprising the polyvinyl alcohol, and drying the retrieved polyvinyl alcohol.

2. The method of claim 1, wherein the polyvinyl alcohol prepared by hydrolyzing polyvinyl acetate with catalysis by a base is a cluster of polyvinyl alcohol particles in the form of lamellae or granules.

3. The method of claim 2, wherein said clusters have diameters between 5 and 80 mesh.

4. The method of any preceding claim, wherein, in step (a), the polyvinyl alcohol prepared by hydrolyzing polyvinyl acetate with catalysis by a base is completely soaked in the ethanol solution.

5. The method of any preceding claim, wherein, in step (a), the ethanol solution has an ethanol concentration of from 95 wt% to 100 wt%.

6. The method of any preceding claim, wherein, in step (a), the polyvinyl alcohol prepared by hydrolyzing polyvinyl acetate with catalysis by a base has a degree of alkaline hydrolysis of from 70 to 99 mole% and a degree of polymerization of from 200 to 4000.

7. The method of any preceding claim, wherein, in step (b), the polyvinyl alcohol is heated and stirred in the ethanol solution at a temperature in the range of from 65 to 85°C.

8. The method of any preceding claim, wherein in step (b), the heating and stirring is carried out for a period in the range 2 to 4 hours.

9. The method of any preceding claim, wherein the polyvinyl alcohol prepared by hydrolyzing polyvinyl acetate with catalysis by a base has a methanol content of about 3% by weight, a methylacetate content of 1 wt% and a sodium acetate content of 1 to 1.5 wt%.

10. The method of any preceding claim, further comprising the preliminary step of carrying out said hydrolysis of polyvinyl acetate with catalysis by a base, preferably wherein the hydrolysis is alcoholysis and is carried out using methanol.

11. A polyvinyl alcohol, comprising less than 0.1 wt% of methanol, less than 0.1 wt% of methyl acetate, and less than 0.3 wt% of sodium acetate, based on the total weight of the polyvinyl alcohol.

12. The polyvinyl alcohol of claim 11, which has a degree of alkaline hydrolysis of from 70 to 99 mole% and a degree of polymerization of from 200 to 4000.

13. The polyvinyl alcohol of claim 11 or 12, which is a cluster of polyvinyl alcohol particles in the form of lamellae or granules.

14. The polyvinyl alcohol of claim 11 to 13, which is obtained according to the method of any of claims 1 to 9.

## Patentansprüche

1. Ein Verfahren zur Reinigung von Polyvinylalkohol bestehend aus folgenden Schritten:
(a) Hinzufügen von Polyvinylalkohol, der durch Hydrolysieren von Polyvinylacetat anhand Katalyse mit einer Base erstellt wurde, zu einer Ethanollösung mit einer Ethanolkonzentration von 95 Gew.-% oder höher;
(b) Erwärmen und Rühren der Ethanollösung, die den Polyvinylalkohol enthält, bei einer Temperatur im Bereich von 50 bis 100°C; und
(c) Rückgewinnen des Polyvinylalkohols aus der Ethanollösung, die den Polyvinylalkohol enthält, sowie Trocknen des rückgewonnenen Polyvinylalkohols.

2. Das Verfahren entsprechend Anspruch 1, wobei der Polyvinylalkohol, der durch Hydrolysieren von Polyvinylacetat anhand Katalyse mit einer Base erstellt wurde, ein Cluster von Polyvinylalkoholpartikeln in Form von Lamellen oder Granulat ist.

3. Das Verfahren entsprechend Anspruch 2, wobei die genannten Cluster Durchmesser von zwischen 5 und 80 Mesh aufweisen.

4. Das Verfahren entsprechend einem der vorhergehenden Ansprüche, wobei bei Schritt (a) der Polyvinylalkohol, der durch Hydrolysieren von Polyvinylacetat anhand Katalyse mit einer Base erstellt wurde, völlig in der Ethanollösung eingeweicht ist.

5. Das Verfahren entsprechend einem der vorhergehenden Ansprüche, wobei bei Schritt (a) die Ethanollösung eine Ethanolkonzentration von 95 Gew.-% bis 100 Gew.-% aufweist.

6. Das Verfahren entsprechend einem der vorhergehenden Ansprüche, wobei bei Schritt (a) der Polyvinylalkohol, der durch Hydrolysieren von Polyvinylacetat anhand Katalyse mit einer Base erstellt wurde, einen Verseifungsgrad von 70 bis 99 Mol-% und einen Polymerisationsgrad von 200 bis 4000 aufweist.

7. Das Verfahren entsprechend einem der vorhergehenden Ansprüche, wobei bei Schritt (b) der Polyvinylalkohol in der Ethanollösung bei einer Temperatur im Bereich von 65 bis 85°C erwärmt und gerührt wird.

8. Das Verfahren entsprechend einem der vorhergehenden Ansprüche, wobei bei Schritt (b) das Erwärmen und Rühren über einen Zeitraum von 2 bis 4 Stunden erfolgt.

9. Das Verfahren entsprechend einem der vorhergehenden Ansprüche, wobei der Polyvinylalkohol, der durch Hydrolysieren von Polyvinylacetat anhand Katalyse mit einer Base erstellt wurde, einen Methanolgehalt von ca. 3 Gew.-%, einem Methylacetatgehalt von 1 Gew.-% und einen Natriumacetatgehalt von 1 bis 1,5 Gew.-% aufweist.

10. Das Verfahren entsprechend einem der vorhergehenden Ansprüche, zu dem weiterhin ein erster Schritt der Durchführung der genannten Hydrolyse von Polyvinylacetat anhand Katalyse mit einer Base gehört, wobei die Hydrolyse bevorzugt eine Alkoholyse ist und unter Verwendung von Methanol durchgeführt wird.

11. Ein Polyvinylalkohol, der, basierend auf dem Gesamtgewicht des Polyvinylalkohols, weniger als 0,1 Gew.-% Methanol, weniger als 0,1 Gew.-% Methylacetat und weniger als 0,3 Gew.-% Natriumacetat umfasst.

12. Der Polyvinylalkohol entsprechend Anspruch 11, der einen Verseifungsgrad von 70 bis 99 Mol-% und einen Polymerisationsgrad von 200 bis 4000 aufweist.

13. Der Polyvinylalkohol entsprechend Anspruch 11 der 12, der ein Cluster von Polyvinylalkoholpartikeln in Form von Lamellen oder Granulat ist.

14. Der Polyvinylalkohol entsprechend Anspruch 11 der 13, der entsprechend dem Verfahren in einem der Ansprüche 1 bis 9 erhalten wird.

## Revendications

1. Procédé de purification de l'alcool polyvinylique comprenant les étapes consistant à :
(a) ajouter de l'alcool polyvinylique préparé en hydrolysant de l'acétate de polyvinyle sous catalyse par une base en une solution d'éthanol d'une concentration de 95 % en poids ou supérieure ;
(b) chauffer et agiter, à une température comprise dans l'intervalle allant de 50 à 100 °C, la solution d'éthanol comprenant l'alcool polyvinylique ; et
(c) récupérer l'alcool polyvinylique de la solution d'éthanol comprenant l'alcool polyvinylique, et sécher l'alcool polyvinylique récupéré.

2. Procédé selon la revendication 1, dans lequel l'alcool polyvinylique préparé en hydrolysant de l'acétate de polyvinyle sous catalyse par une base est un agrégat de particules d'alcool polyvinylique sous la forme de lamelles ou de granules.

3. Procédé selon la revendication 2, dans lequel lesdits agrégats ont des diamètres de maillage de 5 à 80.

4. Procédé selon une quelconque revendication précédente, dans lequel, à l'étape (a), l'alcool polyvinylique préparé en hydrolysant l'acétate de polyvinyle sous catalyse par une base est complètement trempé dans la solution d'éthanol.

5. Procédé selon une quelconque revendication précédente, dans lequel à l'étape (a), la solution d'éthanol a une concentration en éthanol allant de 95 % en poids à 100 % en poids.

6. Procédé selon une quelconque revendication précédente, dans lequel, à l'étape (a), l'alcool polyvinylique préparé en hydrolysant l'acétate de polyvinyle sous catalyse par une base a un degré d'hydrolyse alcaline allant de 70 à 99 % en moles et un degré de polymérisation allant de 200 à 4000.

7. Procédé selon une quelconque revendication précédente, dans lequel à l'étape (b), l'alcool polyvinylique est chauffé et agité dans la solution d'éthanol à une température comprise dans l'intervalle allant de 65 à 85 °C.

8. Procédé selon une quelconque revendication précédente, dans lequel à l'étape (b), le chauffage et agitation est réalisé pendant une durée allant de 2 à 4 heures.

9. Procédé selon une quelconque revendication précédente, dans lequel l'alcool polyvinylique préparé en hydrolysant l'acétate de polyvinyle sous catalyse par une base a une teneur en méthanol d'environ 3 % en poids, une teneur en méthylacétate de 1 % en poids et une teneur en acétate de sodium de 1 à 1,5 % en poids.

10. Procédé selon une quelconque revendication précédente, comprenant en outre l'étape préliminaire d'exécution de ladite hydrolyse de l'acétate de polyvinyle sous catalyse par une base, préférablement dans lequel l'hydrolyse est une alcoolyse et est réalisée en utilisant du méthanol.

11. Alcool polyvinylique comprenant moins de 0,1 % en poids de méthanol, moins de 0,1 % en poids d'acétate de méthyle, et moins de 0,3 % en poids d'acétate de sodium, par rapport au poids total de l'alcool polyvinylique.

12. Alcool polyvinylique selon la revendication 11, qui a un degré d'hydrolyse alcaline allant de 70 à 99 % en moles et un degré de polymérisation allant de 200 à 4000.

13. Alcool polyvinylique selon la revendication 11 ou la revendication 12, qui est un agrégat de particules d'alcool polyvinylique se présentant sous forme de lamelles ou de granules.

14. Alcool polyvinylique selon les revendications 11 à 13, qui est obtenu selon le procédé de l'une quelconque des revendications 1 à 9.
